Europäisches Patentamt

European Patent Office

Office européen des brevets

(11) Numéro de publication: **0 153 290**
**A1**

# (12) DEMANDE DE BREVET EUROPEEN

(21) Numéro de dépôt: 85870010.7

(22) Date de dépôt: 22.01.85

(51) Int. Cl.⁴: **B 01 D 59/18,** B 01 D 53/00,
B 01 J 19/10

(30) Priorité: **24.01.84 BE 212270**

(43) Date de publication de la demande: **28.08.85**
**Bulletin 85/35**

(84) Etats contractants désignés: **AT BE CH DE FR GB IT LI**
**LU NL SE**

(71) Demandeur: **S.A. SOCIETE DE RECHERCHES ET DE**
**DEVELOPPEMENT INDUSTRIEL (SO RE DI), Chemin des**
**Crolis, 4, B-1473 Glabais (BE)**

(72) Inventeur: **Willot, Henri, Chemin des Crolis, 4,**
**B-1473 Glabais (BE)**

(74) Mandataire: **De Brabanter, Maurice et al, Bureau**
**VANDER HAEGHEN 63 Avenue de la Toison d'Or,**
**B-1060 Bruxelles (BE)**

(54) **Procédé et appareillage pour séparer un mélange de fluides.**

(57) On sépare un mélange de fluides entraîné en écoulement subsonique annulaire dans au moins un ondulateur (2) constitué d'un ensemble de cavités (4, 5, 6, 7, 7') axisymétriques aptes à créer des vortex toroïdaux (26) auxquels se superposent des ondes acoustiques stationnaires de manière à créer des nappes annulaires enrichies d'au moins un des constituants que l'on prélève sélectivement à l'aide d'écorceurs (24).

La présente invention est relative à un procédé pour séparer un mélange de fluides entraîné, en écoulement subsonique par un conduit d'amenée, au travers d'un ensemble de cavités axisymétriques comprenant au moins une cavité de résonance propre à définir entre une entrée et une sortie, des ondes acoustiques stationnaires de fréquences d'oscillation diverses.

Ce procédé permet de séparer des constituants gazeux même si leurs propriétés physiques et chimiques sont voisines. Il suffit que l'une d'entre elles soit différente. La grandeur physique permettant de caractériser les constituants et de les distinguer entre eux, peut être le poids moléculaire, la polarité, la viscosité et/ou le coefficient de conductibilité calorifique.

L'invention trouve sa principale application dans la production de gaz purs, la purification de mélanges gazeux, l'épuration de l'air, la lutte contre la pollution, l'élimination du $SO_2$ d'effluents gazeux et l'élimination d'éléments et particules radioactifs du milieu ambiant. Elle permet enfin l'enrichissement d'un flux partiel en une proportion plus grande d'un des constituants. Un exemple classique est constitué par la séparation isotopique, entre autres pour l'enrichissement de l'uranium.

0153290

Jusqu'à ce jour, cette séparation isotopique est généralement réalisée par diffusion gazeuse au travers d'une paroi semi-perméable qui est à la base des installations les plus importantes.

Cependant, d'autres procédés, en particulier des procédés aérodynamiques ont été développés récemment par divers pays industrialisés pour garantir leur indépendance d'approvisionnement en uranium enrichi.

Parmi les plus connus, on peut citer notamment les procédés basés sur le principe de

- la tuyère de séparation de Becker ;
- le tube de Ranque (ou tube de Hilsch) ;
- centrifuges ;
- la sonde de séparation par effet de choc selon Fenn revendiqué dans le brevet américain n°3.465.500 ;
- les cavités acoustiques selon Zenner et Yendall décrites dans le brevet américain n° 3.109.721 ;
- barre vibrante selon Eisenkraft faisant l'objet du brevet américain n° 4.197.094 ;
- glissement différentiel des vitesses par Anderson ;
- séparation par invasion de Campargue.

Peu de similitudes existent entre les divers procédés cités ci-dessus. Cependant, le principe de base de la séparation moléculaire consiste à soumettre un ensemble de molécules gazeuses à des accélérations spécifiques à l'aide d'un champ de force provenant d'ondes de pression accoustique stationnaires ou de champs de force centrifuge, afin de modifier la densité de population de certains constituants dans certaines parties d'une enceinte.

L'inconvénient commun de ces procédés connus réside dans des coefficients de séparation insuffisants des divers constituants, des consommations spécifiques d'énergie trop importantes et la complexité des installations.

Le procédé aérodynamique par tuyère de séparation selon Becker utilise le gradient de pression créé dans un écoulement surpersonique défléchi. La déflection de l'écoulement dans une tuyère courbe engendre un gradient de pression qui permet la séparation des isotopes par suite de leur diffusion différente, c'est-à-dire par barodiffusion. Les molécules lourdes se concentrent au voisinage de la paroi déflective extérieure. Un écorceur sépare alors l'écoulement en deux fractions dont l'une est enrichie en gaz légers, l'autre en gaz lourds.

Ce procédé est de loin le plus largement développé des procédés aérodynamiques.

Ce procédé a donné lieu à de nombreuses variantes qui font toutes encore l'objet d'études théoriques et expérimentales. Les variantes les plus importantes sont:

- séparation à double déflection ;
- séparation à double déflection avec gaz déflecteur ;
- séparation par double alimentation ;
- séparation par jets opposés.

Tous ces procédés sont cependant encore loin de supplanter les procédés classiques de diffusion gazeuse et d'ultracentrifugation pour la séparation isotopique.

4.

0153290

Dans le dispositif à sonde de séparation par effet de choc selon Fenn, on dispose un obstacle conique obtus où à pointe arrondie dans l'axe d'un jet supersonique qui permet de séparer certains constituants d'un mélange gazeux. En effet, une onde détachée se forme en amont de cet obstacle. La trajectoire de différentes molécules de gaz traversant une telle onde de choc dépend alors de leurs propriétés physiques et chimiques. La zone centrale de l'onde de choc, formée juste devant l'obstacle est enrichie en molécules lourdes qui peuvent être évacuées par un canal axial aménagé dans l'obstacle.

Le principal désavantage du procédé de séparation par sonde est la faible valeur du coefficient de partage, défini comme le rapport entre le flux traversant la sonde (fraction lourde) et le flux entrant formant le jet.

La section du canal axial de l'ostacle pouvant être matérialisé par un tube de Pitot, est négligeable par rapport à la section du conduit d'amenée du mélange gazeux, de sorte que les rendements de l'opération ne peuvent être qu'extrêmement faibles, même si plusieurs obstacles sont disposés dans le même conduit.

En outre, ce procédé ne peut être appliqué qu'à un mélange ne comprenant que deux constituants gazeux.

Quant à la méthode de séparation dans un champ acoustique selon G.H. Zenner et C.F. Yendall décrite dans le brevet américain n° 3.109.721, elle met en

0153290

oeuvre une enceinte fermée de forme conique comprenant une source acoustique fixée au sommet du cône. Cette enceinte conique présente à sa base, une surface sphérique, servant de réflecteur pour ces ondes acoustiques. En choisissant une fréquence d'oscilliation appropriée, on peut créer par résonance grâce aux ondes stationnaires, un champ de pression acoustique important par rapport à l'intensité de la source.

Dans l'enceinte susdite, l'intensité acoustique croît d'une extrémité à l'autre. Elle est faible au voisinage du réflecteur sphérique et intense au voisinage de la source. Ce gradient d'intensité a pour effet d'enrichir la zone située près du réflecteur en constituants lourds et la zone située près de la source en constituants légers.

Ce procédé connu présente toutefois l'inconvénient majeur de ne pas pouvoir fournir des rendements quantitatifs suffisants. Les faibles rendements obtenus s'expliquent par le fait que les zones d'enrichissement sont créées dans le sens longitudinal, alors que l'alimentation en gaz frais et le prélèvement d'un flux partiel enrichi ont lieu dans le sens transversal. Cette disposition a pour conséquence de rompre constamment l'équilibre. Il s'agit donc d'un système instable qui ne permet que la séparation de débits relativement peu élevés.

La barre vibrante selon Eisenkraft présente des inconvénients analogues à la méthode précédente. En outre, elle ne peut être appliquée qu'à la séparation de mélanges binaires.

La présente invention vise à remédier aux inconvénients précités. Elle propose un procédé qui permet d'échelonner les zones d'enrichissement dans le sens de l'écoulement gazeux, ce qui assure un équilibre stable et permet d'assurer des débits importants.

Elle concerne un procédé pour séparer un mélange de fluides entraîné en écoulement subsonique par un conduit d'amenée au travers d'un ensemble de cavités axisymétriques comprenant au moins une cavité de résonance propre à définir entre une entrée et une sortie, des ondes acoustiques stationnaires de fréquences d'oscillation diverses, essentiellement caractérisée en ce qu'on régularise dans le conduit d'amenée, le flux dudit mélange de fluides en écoulement turbulent, en un débit constant que l'on dirige ensuite sur un noyau central de profil aérodynamique d'un premier col d'entrée, afin de créer un écoulement annulaire dans un col d'accélération débouchant sur une cavité ayant un profil aérodynamique apte à susciter un décollement de l'écoulement loin des parois extérieures de la cavité et créer ainsi, dans une zone de recirculation, des vortex toroïdaux qui sont entraînés le long des parois extérieures de la cavité, par l'écoulement annulaire, dans le sens du flux, vers au moins une zone de rétrécissement, qui concentre les vortex et accélère leur vitesse de rotation jusque dans un second col aboutissant à une seconde cavité et étant profilé de telle manière que ces vortex et l'écoulement du fluide donnent lieu à des ondes qui y sont amplifiées

et son propagées dans la première cavité pour donner, après un certain nombre de réflexions diverses sur les parois de la première cavité, des ondes acoustiques stationnaires de fréquences variées qui contribuent au détachement des vortex de la zone de recircultion et créent dans le voisinage du second col, un champ de pression acoustique permettant la séparation des divers constituants du mélange fluide, tandis qu'à ces ondes acoustiques stationnaires se superpose un effet de séparation dû à un champ de force centrifuge des vortex, créant des nappes annulaires enrichies d'au moins un des constituants que l'on prélève sélectivement au moyen de pièges ménagés à la périphérie de la paroi extérieure de l'enceinte, à la surface d'un second corp central ou d'un corps annulaire disposé concentriquement à ce second corps central.

Suivant une particularité de l'invention, on crée à l'aide d'un obstacle à angle vif ménagé à la périphérie du col d'entrée, un second vortex qui est paraxial au premier et grâce auquel on provoque un décrochement de flux d'écoulement loin des parois extérieures, permettant la création de zones de recirculation qui engendre des vortex dans l'ondulateur.

On crée avantageusement le long du premier noyau central de forme aérodynamique apte à susciter un décollement de l'écoulement annulaire loin des parois de ce corps, une zone de dépression qui engendre une zone de recirculation lelong desdites parois.

L'invention concerne également un appareillage pour mettre en oeuvre le procédé décrit ci-dessus, ce procédé étant essentiellement caractérisé en ce qu'il comprend successivement :

- éventuellement un filtre, de préférence rotatif, capable d'éliminer du mélange de fluides à traiter, des particules de dimensions prédéterminées ;

- éventuellement un sécheur ;

- des moyens pour mouvoir le mélange de fluides à traiter dans un circuit ;

- un conduit d'amenée destiné à régulariser le débit de fluides ;

- un col d'entrée muni d'un noyau central de profil aérodynamique ;

- une chambre porteuse du noyau central ;

- un ensemble de cavités axisymétriques comprenant au moins une cavité de résonance dont les parois sont profilées de manière à susciter un décollement d'une veine annulaire loin des parois extérieures de la cavité et créer ainsi dans une zone de recirculation, des vortex toroîdaux, qui sont entraînés le long des parois extérieures de la cavité par l'écoulement annulaire, dans le sens du flux ;

- une zone de rétrécissement ;

9.

- un second col ;

- une seconde cavité , appelée zone tranquillisatrice;

- un col de sortie de la périphérie duquel sont ménagés des pièges annulaires ;

- un second corps central entouré éventuellement d'un corps annulaire concentrique dans lesquels sont ménagés des pièges annulaires et éventuellement un canal central.

D'autres particularités et détails de l'invention ressortiront de la description détaillée ci-jointe d'une forme de réalisation particulière de l'invention, qui fait référence aux dessins suivants, dans lesquels :

- la figure 1 est un schéma général de l'appareil suivant l'invention ;

- la figure 2 illustre la formation de vortex toroïdaux dans une tuyère suivant l'invention ;

- la figure 3 est une coupe longitudinale de l'ensemble des ondulateurs mis en série dans le montage montré dans la figure 1 ;

- la figure 4 montre un résonateur additionnel ;

- la figure 5 est une coupe détaillée de l'un des ondulateurs, et
- la figure 6 illustre la création d'un champ magnétique dans un ondulateur.

Dans ces figures, les mêmes notations de référence désignent des éléments identiques ou analogues.

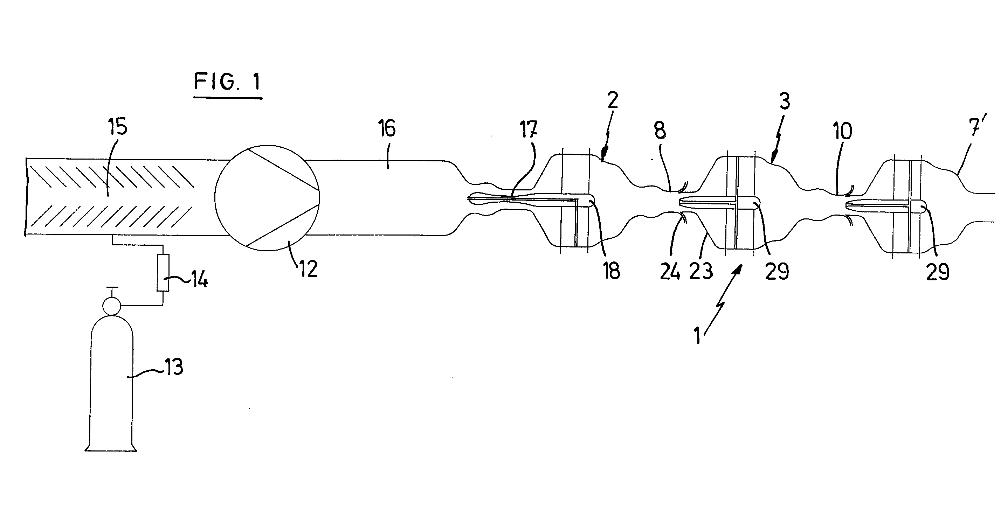

L'appareil représenté à la figure 1 et désigné dans son ensemble par la notation de référence 1, comprend deux ondulateurs 2,3, comportant chacun diverses cavités 4,5, 6,7,7' situées dans le prolongement l'une de l'autre et reliées entre elles par des cols 8,9,10 et 11, ainsi que des moyens 12 permettant de débiter un flux d'air éventuellement séché et épuré, chargé d'un constituant gazeux quelconque à séparer.

Ces moyens 12 sont dans une forme particulière de réalisation de l'invention, constituées d'une turbine, d'un ventilateur ou d'un compresseur volumétrique assurant un débit de 200 $Nm^3$/h sous une pression de 1220 millibars absolus. L'air aspiré au milieu ambiant est éventuellement filtré et séché. De l'anhydride sulfureux, soutiré d'une bonbonne 13, est dosé au moyen d'un débitmètre et injecté dans une tubulure d'aspiration 15, installée en amont de la turbine 12.

On régularise le débit de mélange de gaz à traiter dans le conduit d'amenée 16, qui présente un diamètre de 300 millimètres et une longueur de 3 mètres. Dans ce conduit d'amenée 16, le flux de gaz est soumis à un écoulement turbulent et dirigé vers le col d'entrée 17 du noyau central du formeur annulaire 18 profilé aérodynamiquement et disposé dans l'axe dudit col d'entrée 17. Le noyau central du formeur annulaire comporte un canal central 19 qui permet de capter la pression frontale à l'entrée de l'ondulateur 2.

La vitesse d'entrée du flux gazeux dans le tube d'amenée précédant le col d'entrée 17, est de 15,25 mètres/seconde. Le noyau central du formeur annulaire est destiné à former un écoulement annulaire et à moduler celui-ci par plusieurs détentes avant de le conduire dans l'ondulateur 2 proprement dit avec une vitesse de 132 mètres/seconde. Une variation de vitesse de l'ordre de 20 % est admise.

L'ondulateur 2 comporte une enceinte tranquillisatrice 20 pourvue d'ailerons 21 en croix pour maintenir en place le noyau central du formeur annulaire 18.

Le col d'accélération 17 débouche sur une cavité 4 par un divergent 22 qui provoque l'écartement de l'écoulement pour créer une zone de recirculation qui donnera naissance aux vortex toroïdaux.

Le profil axisymétrique de l'ondulateur 2 provoque la formation de vortex dans l'écoulement gazeux. Ces vortex tournent dans le sens horlogique ou anti-horlogique, suivant le cas, le long des parois extérieures du formeur annulaire 18 ou le long de l'axe central de la tuyère. A la sortie de la première tuyère, un rétrécissement 30 comprime les vortex, ce qui accroît fortement leur vitesse de rotation jusqu'au moment où ils pénètrent dans la chambre de tranquillisation 5. Comme le diamètre de la chambre de tranquillisation 5 est faible, on obtient des gradients de pression très importants.

0153290

On observe également dans la chambre de tranquillisation 5 que la variation de la résistance à l'écoulement des vortex, provoque, par effet de pompage, une onde acoustique qui se développe vers l'entrée de la première cavité acoustique 4 où elle alimente et régularise la formation de vortex.

L'accélération des vortex amplifiée par la pression acoustique provoque la migration des gaz lourds vers la périphérie des vortex. On réalise ainsi une séparation des différents constituants du gaz qu'il suffit de prélever par des écréteurs disposés sur la paroi de la tuyère ou dans la zone centrale d'écoulement.

Dans ce but, l'écoulement annulaire obtenu à la sortie du premier ondulateur est projeté par un col d'accélération 9 dans le second ondulateur 3.

Le col d'accélération 9 est muni d'un écorceur 24 à arête vive destiné à créer une onde. Il débouche par un divergent 23 sur une cavité 6 ayant un profil aérodynamique divergent apte à susciter un décollement de l'écoulement annulaire loin de la paroi du divergent 23, jouant le rôle de parabole acoustique qui contribue à créer des zones stationnaires.

En effet, le long de la paroi des divergents 22 et 23 et d'autant plus qu'on s'éloigne du changement de section et que ce dernier est brusque, il y a accroissement de pression et diminution de vitesse ; les molécules fluides en contact avec la paroi finissent par avoir une

13.

0153290

énergie insuffisante pour vaincre le gradient de pression positif ; elles deviennent stationnaires ou reviennent en arrière, ce qui crée les zones de recirculation.

Il s'établit ainsi le long des parois des cavités 4 et 6, des zones de recirculation toroïdales qui donnent naissance à des vortex toroïdaux 26 qui, sous l'effet combiné des ondes acoustiques générées en 5, 7 et 24, se propagent le long des parois des ondulateurs 2 et 3.

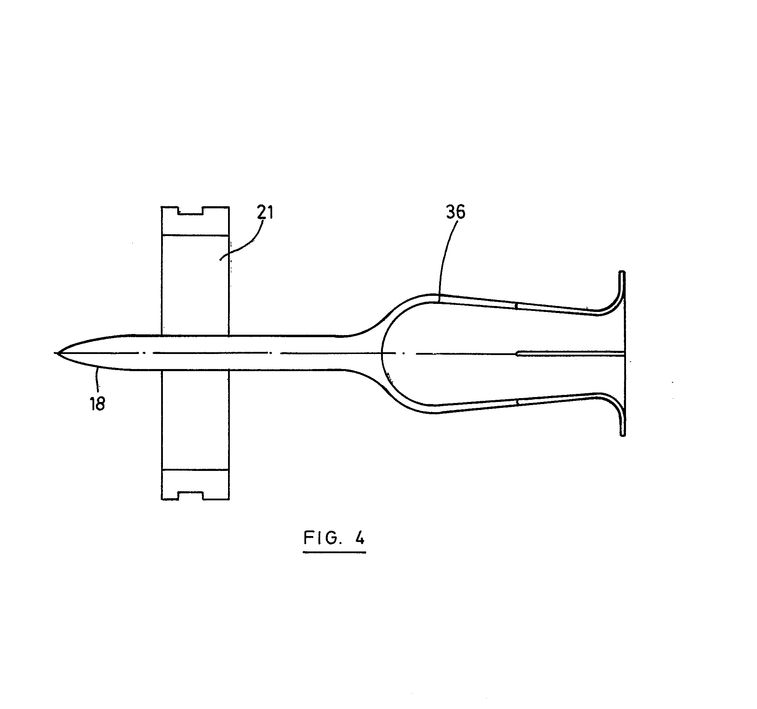

La zone tranquillisatrice 27 abrite des ailerons 28, par exemple en forme de croix, qui portent le noyau central 20. La vitesse moyenne de l'ensemble du volume du flux annulaire à cet endroit est de 11 m/s. (figure 4).

Les zones de rétrécissement 30, 31 donnent lieu à une accélération de la veine centrale de l'écoulement qui passe de 15,25 m/s à 106,5 m/s dans les cols 32 et 33. Cette accélération est associée à une concentration des vortex. Grâce à la conservation de la quantité de mouvement, la vitesse de rotation augmente progressivement jusqu'aux cavités 5 et 7, où les vortex subissent un ralentissement. Les cavités 5 et 7 sont profilées de telle manière que les variations périodiques de l'écoulement dans cette zone donnent lieu à des ondes acoustiques de forte intensité. Elles aboutissent aux cols d'écoulement 8 et 10 au voisinage desquels sont prélevés sélectivement, au moyen de pièges 34 ménagés à la périphérie de la paroi extérieure de l'enceinte, à la surface d'un second corps central ou d'un corps annulaire disposé concentriquement à ce second corps central, des nappes annulaires enrichies en un ou plusieurs constituants.

14.

0153290

Le corps central en réduisant de moitié la distance libre de l'enceinte, empêche l'établissement d'ondes acoustiques interférentes dans une direction transversale perpendiculaire à l'axe de l'enceinte.

Les gaz plus légers sont récupérés par des évents ou écréteurs annulaires.

Il peut être avantageux de prévoir dans les formeurs annulaires 29 des enroulements 35 destinés à introduire un champ magnétique afin de favoriser la migration de certaines molécules (figure 6).

**EXEMPLE 1.**

Une tuyère 1 présentant un profil semblable à celle montrée à la figure 1 est alimentée en air contenant 4.000 à 318.000 ppm de $SO_2$. Ce débit est compris entre 95 et 100 mètres cubes normaux par heure.

Le $SO_2$ est introduit dans une tubulure d'aspiration 15 de l'air ambiant à partir d'une bombonne 13 remplie de $SO_2$ concentré.

Un plénum d'un diamètre intérieur de 300 mm et d'une longueur de 3 m est installé en amont et relié à une turbine/ventilateur qui assure l'aspiration et la pulsion de l'air pollué sur une distance qui peut varier de 1,5 m à plusieurs dizaines de mètres, en tenant compte bien sûr de la capacité du ventilateur et des pertes de charge enregistrées. Cette turbine injecte le gaz pollué dans l'ensemble de l'ondulateur à cavités.

La teneur en $SO_2$ à l'entrée du premier ondulateur 2 est mesurée à l'aide d'un appareil "Thetra-Sensor" basé sur le principe de la voltamétrie.

La concentration de $SO_2$ du mélange de gaz à l'entrée du premier ondulateur 2, dans un conduit d'amenée 16, a été choisie au cours de trois essais distincts égale respectivement à

4.000 ppm (0,3 % en vol.) dans un 1er essai ;
6.000 ppm (0,6 % en vol.) dans un 2ème essai ;
318.000 ppm (35 % en vol.) dans un 3ème essai ;

La première partie des ensembles d'ondulateurs à cavités est la partie surnommée formeur annulaire 18 — elle a deux fonctions :

1. capter la pression frontale à l'entrée de l'ondulateur à cavités.

2. former un flux annulaire tout en créant plusieurs détentes sur ce flux annulaire avant d'entrér dans l'ondulateur 1.

La vitesse d'entrée est de 15 m/s, la vitesse de sortie est de 132 m/s à une pression de 18000 Pascal acceptant une variation de 20 % sur cette pression.
Idem pour la variation de débit, elle est de 20 %.

Le deuxième ondulateur à cavités a des fonctions de séparation et se compose d'un divergent, d'une partie cylindrique porteuse d'une croix servant de support à l'obstacle central du formeur annulaire, sa vitesse à cet endroit est de 11 m/s et sera inchangée jusqu'à l'entrée dans la partie tranquillisatrice de l'ondulateur qui va passer à la vitesse de 15 m/s et qui va accélérer l'écoulement jusqu'à une vitesse d'un premier col 106 m/s pour entrer dans la cavité à une vitesse moyenne de 90 m/s. Il subit une accélération dans le col d'écoulement 8,10, juste avant l'écorceur 24, à une vitesse de 126,6 m/s pour atteindre dans les cols 9 et 11, une vitesse de 152,5 m/s. Le deuxième ondulateur a les mêmes caractéristiques que le premier ondulateur bien que dans les calculs, il faut tenir compte d'une perte de volume de 1 à 10 %, dû aux écorceurs ; il faudrait donc adapter les sections de passage de façon à garder les mêmes vitesses.

La teneur en $SO_2$ à la sortie du réacteur de l'air purifié a été mesurée à l'aide d'un appareil "Thermo electron" basé sur le principe de fluorescence UV pulsé .

Les concentrations en $SO_2$ mesurées aux sorties des épurateurs ont été déterminées, après prélèvement dans des sac en "radlar", par micro-coulométrie oxydative.

Lors de l'essai la concentration en $SO_2$ à la sortie de l'air purifié était en dehors de la limite de détection de l'appareil "Termo Electron". Cette limite de détection est de 50 ppb.

Teneur en $SO_2$ du gaz

**ENTREE**                    **SORTIE DU REACTEUR**

    4.000 ppm        inférieur à    50 ppb
    6.000 ppm                        5 ppm
  318.000 ppm                      0...3    ppm

Le gaz porteur, en l'occurence l'air, sort pratiquement pur tandis que le gaz porté, c'est-à-dire le $SO_2$ pour le premier ondulateur, est chargé d'environ 10 % de son propre volume de gaz porteur. En réinjectant celui-ci, en qualité de gaz porteur dans une seconde tuyère, on rend possible l'obtention d'un plus grand degré de pureté.

Par ondulateur, la perte totale de débit est d'environ 2 % et équivaut à la quantité de gaz d'essai prélevée pour éliminer les 4000 ppm de $SO_2$. Un effet de séparation multiple en cascade est obtenu en alignant plusieurs ondulateurs les uns à la suite des autres dans l'exemple 3.

Un essai a été réalisé à l'aide d'une série de 10 ondulateurs consécutifs qui prélèvent chacun une partie de l'anhydride sulfureux mélangé à un flux. Cette opération a permis, d'obtenir une dépollution dont le rendement a été contrôlé par des organismes agréés et qui atteint 99,99 % de rendement de séparation pour extraction de 35 % du volume entrant d'anhydride sulfureux.

La sortie du dernier ondulateur a cavités muni d'un tube d'une longueur de 5 m raccordé à cette extrémité a permis d'y faire les prélèvements. Le point de mesure était à l'extrémité sortante du plénum d'entrée.

Le prélèvement d'échantillon d'air traité et dépollué est réalisé au centre du plénum de la sortie, à une distance de 3 mètres de l'extrémité.

Ces essais ont été réalisés à plusieurs reprises à des températures différentes partant de 0 à 150°, sans qu'il n'y ait de modifications fondamentales sur les résultats.

Le seul ajustement à faire est la pression frontale de l'entrée de l'ondulateur à cavités. L'efficacité de la séparation n'est pas influencée par des degrés d'hygrométrie différentes. Le $SO_2$ ainsi séparé se laisse transporter par des tubes d'un diamètre intérieur de 4 mm jusque des distances de 6 m dans des barboteurs afin de neutraliser le $SO_2$.

Dans certains essais de bons résultats ont été obtenus en disposant des résonateurs additionnels dans le prolongement de la cavité de résonance.

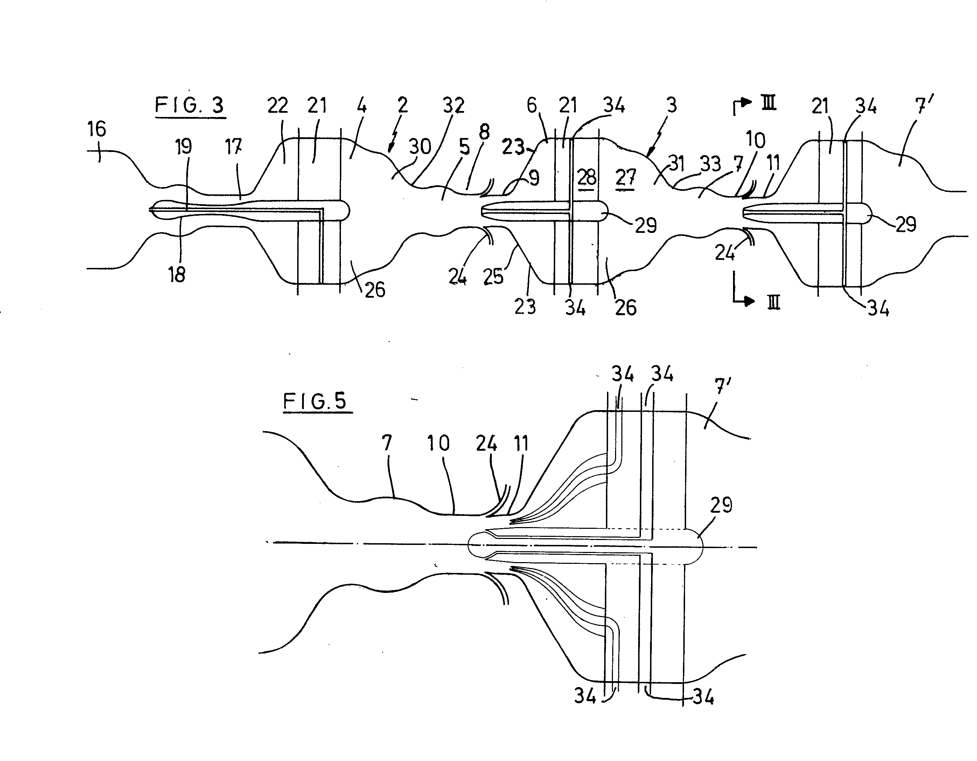

Une forme de réalisation particulière d'un résonateur additionnel 36 consiste en un vase ou une tulipe pourvue de parois très minces. Le volume intérieur forme un volume de résonance avec une profondeur correspondant approximativement à une fraction de la longueur d'onde de vibration fondamentale. (voir figure 3)

La séparation des divers constituants formant des veines annulaires concentriques s'effectue à l'aide d'écorceurs ou à l'aide de pièges disposés à plusieurs endroits de la cavité, à la périphérie des parois extérieures ou d'un corps central ou annulaire concentrique.

**EXEMPLE 2.**

Un prototype industriel en fonctionnement à l'usine SOPAR de Sart-Dames-Avelines a été réalisé pour un débit de gaz égal à 5000 Nm$^3$ / h avec tolérance de plus ou moins 10 % sur le débit.

Un mélange d'air chargé de 5.644 mg/m$^3$ de dichloro-méthane, 3.464 mg/m$^3$ d'isopropanol et 8.283 d'acétone à une température de 39,4 ° C est envoyé à l'aide d'un ventilateur-surpresseur de 4000 m$^3$/h dans un appareillage analogue à celui de la figure 1.

Le dichlorométhane séparé et sortant enrichi du réacteur principal est injecté dans un incinérateur et l'acide chlorhydrique ainsi produit est à son tour séparé des gaz de combustion au moyen d'un deuxième réacteur travaillant à des températures de plus de 400 ° C, pour être ensuite dilué par barbottage et stocké.

A la sortie du réacteur principal, l'air purifié n'est plus chargé que de 566 mg/m$^3$ de dichlorométhane, de 1.011 mg/m$^3$ d'isopropanol et de 1656 mg/m$^3$ d'acétone.

Les rendements de séparation exprimés en % sont donc :

- pour le dichlorométhane : 90 %

- pour l'isopropanol : 48 %

- pour l'acétone : 80 %

Quant au rendement du second réacteur d'enrichissement et de séparation d'acide chlorhydrique, il est de 99,99 %, ce réacteur travaillant au débit de gaz prévu par construction.

0153290

Les applications de l'appareil décrites ci-dessus sont multiples et concernent en particulier les industries chimiques et pharmaceutiques, les sciences nucléaires, le domaine médical et hospitalier.

Parmi les applications, citons, à titre d'exemples:
- la séparation du CO dans l'air;
- la récupération de $CO_2$, $SO_2$, $NO_X$ et CO dans des fumées industrielles , notamment de centrales thermiques ;
- l'élimination de solvants, notamment d'acétone, de dichlorométhane et d' isopropanol dans un évent ;
- la production de CO pour l'industrie chimique;
- l'élimination et la récupération du sulfure de carbone des évents provenant de la fabrication de la viscose ;
- la production d'air enrichi en oxygène ;
- la production d'hydrogène par enrichissement du gaz de cracking ou de cokerie ; .
- la production de méthane et élimination du CO et de l'$H_2S$ ;
- la séparation de l'air avec production d'$O_2$ et de $N_2$ ;
- la production d'un gaz rare ;

- l'enrichissement des gaz provenant de la gazéification du charbon ;
- la séparation isotopique de l'uranium ;
- la production d'eau lourde ;
- l'élimination de la radio-activité de l'air par séparation des gaz radio -actifs éventuellement

22.

0153290

porteurs de particules ;
- préparation d'un air stérile contenant un agent
spécifique en vue: du traitement des allergies
de traitement asthmatologiques
ou immunologiques,
du traitement de maladies
chroniques,
de la climatothérapie ;
- création de salles blanches, c'est-à-dire
d'enceintes tout à fait stériles
destinées à améliorer l'environnement d'organes à
greffer ;
- séchage de gaz ;
- enrichissement du HF;

- dépollution automobile ;
- installation de dépollution accidentelle;


Le procédé de séparation des gaz peut également être utilisé pour le dépoussièrage, la grannulométrie et la purification de liquide en phase vapeur.

L'efficacité de l'appareillage décrit ci-avant a été vérifié par divers essais.

Des mesures de niveaux sonores ont été effectués autour du réacteur à l'aide d'un analyseur statique de niveaux de bruit " BRUEL et KJAER ". Ce niveau sonore est d'environ 63,0 dB (A) à une distance de 50 m. du réacteur démuni de protection acoustique.

0153290

Les exemples décrits ci-dessus décrivent la mise en oeuvre des débits de gaz situés entre 100 et 5000 $Nm_3/h$. Le procédé peut cependant être extrapolé à des débits de gaz beaucoup plus importants, ce qui rend son industrialisation très aisée dans un très grand nombre de domaines d'applications.

La consommation d'énergie est faible et résulte uniquement de la perte de charges situées entre 10 et 20 % de la pression initiale du gaz se trouvant sous 100 à 200 mbars au-dessus de la pression atmosphérique .

Il est évident que l'invention n'est pas exclusivement limitée à la forme de réalisation représentée et que bien des modifications peuvent être apportées dans la forme, la disposition et la constitution de certains des éléments intervenant dans sa réalisation, sans pour autant sortir du cadre de l'invention.

Ainsi l'efficacité de la séparation et le choix des composants à prélever peut être influencé à volonté lorsqu'on modifie la contenance des cavités émettrices 5,7 et la position des créneaux-pièges 34.

L'appareillage ne comporte aucune pièce mécanique en mouvement en-dehors du surpresseur. Une multitude de cavités peuvent être placées en série, ce qui permet d'augmenter le rendement d'une installation de séparation.

L'appareillage conserve son efficacité même si les pressions et les températures mises en jeux sont élevées à condition que les détentes s'effectuent en dehors des circuits du réacteur.

:

R E V E N D I C A T I O N S.

1.    Procédé pour séparer un mélange de fluides comprenant au moins un composant compressible entraîné en écoulement subsonique par un conduit d'amenée, au travers d'un ensemble de cavités (4,5,6,7,7') axisymétriques comprenant au moins une cavité de résonance propre à définir entre une entrée et une sortie, des ondes acoustiques stationnaires de fréquences d'oscillations diverses, caractérisé en ce qu'on régularise dans le conduit d'amenée, (16) le flux dudit mélange de fluides en écoulement turbulent, en un débit constant que l'on dirige ensuite sur un noyau central (18) de profil aérodynamique d'un premier col d'entrée, (17) afin de créer un écoulement annulaire dans un col d'accélération débouchant sur une cavité (4) ayant un profil aérodynamique apte à susciter un décollement de l'écoulement loin des parois extérieures (25) de la cavité (4) et créer ainsi dans une zone de recirculation, des vortex toroïdaux (26) qui sont entraînés le long des parois extérieures (25) de la cavité, (4)par l'écoulement annulaire, dans le sens du flux, vers au moins une zone de rétrécissement, (30) qui concentre les vortex, et accélère leur vitesse de rotation jusque dans un second col (9) aboutissant à une seconde cavité (6) et étant profilé de telle manière que ces vortex (26) et l'écoulement du fluide donnent lieu à des ondes qui y sont amplifiées et sont propagées dans la première cavité (4) pour donner,après un certain nombre de réflexions diverses sur les parois (25) de la première cavité (4) des ondes acoustiques stationnaires de fréquences variées qui contribuent au détachement des vortex (26) de la zone de recirculation et créent dans le voisinage du second col (9) un champ de pression acoustique permettant la séparation des divers constituants du mélange fluide tandis qu'à ces ondes acoustiques stationnaires, se superpose un effet de séparation dû à un champ de force centrifuge des vortex (26), créant des nappes annulaires enrichies d'au moins un des constituants que l'on prélève sélectivement au moyen de pièges (24) ménagés à la périphérie de la paroi extérieure de l'enceinte ,(3) à la surface d'un second corps central ou d'un corps annulaire disposé concentriquement à ce second corps central.

2. Procédé suivant la revendication 1, caractérisé en ce qu'on crée, à l'aide d'un obstacle à angle vif ménagé à la périphérie du col d'entrée ,(17) un second vortex qui est paraxial au premier et grâce auquel on provoque un décrochement du flux d'écoulement loin des parois extérieures de ladite enceinte, lesquelles sont profilées selon une surface parabolique afin d'assurer une réflexion engendrant des ondes stationnaires.

3. Procédé suivant l'une quelconque des revendications 1 et 2, caractérisé en ce que l'on crée le long du premier noyau central (29) de forme aérodynamique apte à susciter un décollement de l'écoulement annulaire loin des parois de ce corps, des champs de dépression qui engendrent une zone de recirculation le long desdites parois.

4.  Procédé suivant la revendication 1, caractérisé en ce que l'on assure l'enrichissement d'un flux annulaire en un des constituants, par diffusion des molécules gazeuses les plus légères à travers des nappes annulaires périphériquesdes vortex toroîdaux susdits, qui sont soumises par laminage à des gradients de pression considérables, entre autres sous l'effet de gravitation du champ rotatif des vortex, des zones de recirculation ou/et d'un champ magnétique (35)

5.  Appareillage pour mettre en oeuvre le procédé suivant l'une quelconque des revendications précédentes, caractérisé en ce qu'il comprend successivement :

   -   éventuellement un filtre, de préférence rotatif, capable d'éliminer du mélange de fluides à traiter, des particules de dimensions prédéterminées ;

   -   éventuellement un sécheur ;

   -   des moyens pour mouvoir le mélange de fluides à traiter dans un circuit ;

   -   un conduit d'amenée (15) destiné à régulariser le débit de fluides ;
   -   le col d'entrée (17) muni d'un noyau central de profil aérodynamique (18) ;

   -   une chambre porteuse (2) du noyau central ;

- un ensemble de cavités axisymétriques comprenant au moins une cavité de résonance dont les parois (25) sont profilées de manière à susciter un décollement d'une veine annulaire loin des parois extérieures de la cavité et créer ainsi sous l'influence des ondes acoustiques dans une zone de recirculation, des vortex toroîdaux, (26) qui sont entraînés le long des parois extérieures de la cavité par l'écoulement annulaire, dans le sens du flux ;

- une zone de rétrécissement (30) ;

- un second col (9) ;

- une seconde cavité (6) ;

- un col de sortie à la périphérie duquel sont ménagés des pièges annulaires (24) ;

- un second corps central (29) entouré éventuellement d'un corps annulaire concentrique dans lesquels sont ménagés des pièges annulaires et éventuellement un canal central (34).

6. Appareillage suivant la revendication 5, caractérisé en ce qu'une des cavités comporte un dispositif ménagé autour de cette cavité et/ou dans le corps central et/ou dans un corps intermédiaire en vue de créer un champ électro-magnétique (35) permanent ou alternatif.

29.

0153290

7. Appareillage suivant l'une quelconque des revendications 5 et 6, caractérisé en ce qu'au moins un résonateur à parois très minces (36), ayant la forme d'une tulipe, disposée axialement en amont ou en aval d'une cavité de résonance, (4,6) est orienté vers l'amont ou vers l'aval par rapport au flux et destinée à stabiliser le spectre de fréquences.

FIG. 1

0153290

6   X   21

23

3   31   33   7   24   11   21   34

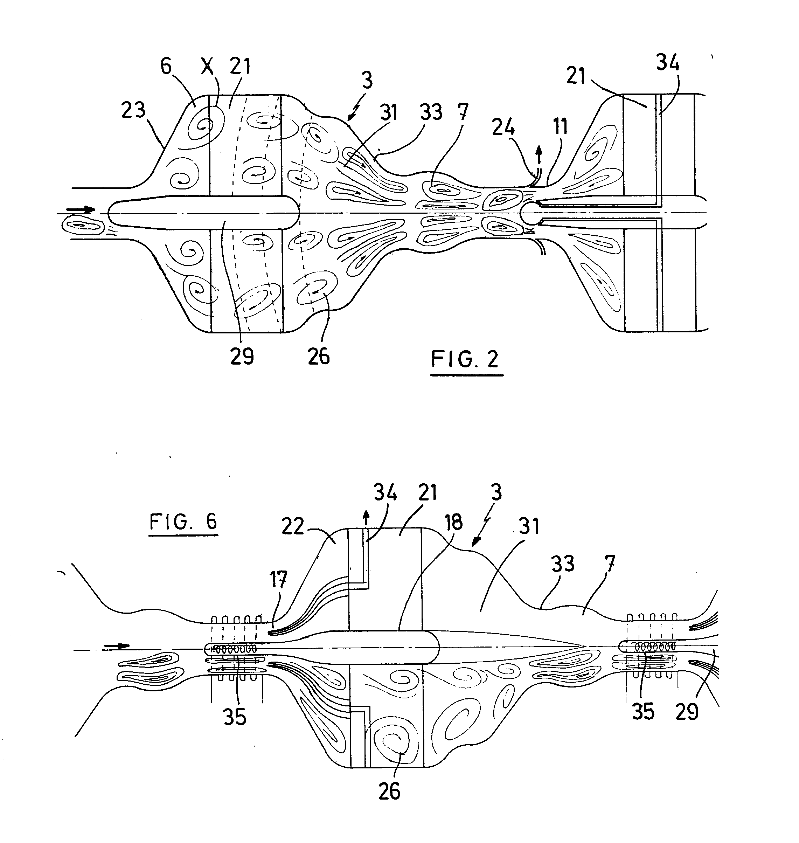

29   26   FIG. 2

FIG. 6   34   21   3

22   18   31

17   33   7

35   35   29

26

FIG. 3

FIG. 5

3/4

01153290

FIG. 4

Office européen
des brevets

**RAPPORT DE RECHERCHE EUROPEENNE**

0153290
Numéro de la demande

EP 85 87 0010

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-2 301 467 (MOBIL OIL) | | B 01 D 59/18 B 01 D 53/00 B 01 J 19/10 |
| | --- | | |
| A | FR-A-1 230 416 (E.W.A. BECKER) | | |
| | --- | | |
| A | GB-A-1 283 587 (MOBIL OIL) | | |
| | ----- | | |

**DOMAINES TECHNIQUES RECHERCHES (Int. Cl.4)**

B 01 D 53/00
B 01 D 59/00
B 01 J 19/00
B 01 D 51/00

Le présent rapport de recherche a été établi pour toutes les revendications

| Lieu de la recherche | Date d'achèvement de la recherche | Examinateur |
|---|---|---|
| LA HAYE | 13-05-1985 | BOGAERTS M.L.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant